# EUROPEAN PATENT SPECIFICATION

(11) **EP 4 012 206 B1**
(45) Date of publication and mention of the grant of the patent: **06.11.2024**
(21) Application number: 20861584.9
(22) Date of filing: 02.09.2020
(51) Int. Cl.: F16C 11/06, B62D 9/02, B62K 5/10, B62K 5/027, B62K 5/05, B60G 7/00

(54) **LEANING VEHICLE**
NEIGEFAHRZEUG
VÉHICULE INCLINABLE

(30) Priority: 02.09.2019 JP 2019159312; 03.02.2020 WO PCT/JP2020/003985
(43) Date of publication of application: 15.06.2022
(73) Proprietor: Yamaha Hatsudoki Kabushiki Kaisha, Iwata-shi, Shizuoka 438-8501 (JP)
(72) Inventor: TAKIMOTO, Hiroshi, Iwata-shi, Shizuoka 438-8501 (JP)
(74) Representative: Stöckeler, Ferdinand
(86) International application number: PCT/JP2020/033276
(87) International publication number: WO 2021/045111

(56) References cited:
- WO-A1-2018/162169
- GB-A- 737 811
- JP-A- 2002 337 779
- JP-A- 2009 079 652
- JP-A- H01 229 787
- JP-A- H03 178 710
- JP-A- H03 178 710
- JP-A- S62 184 217
- JP-U- H0 512 738
- JP-U- H0 512 738
- US-A- 4 712 940
- US-B1- 8 851 785

## Description

### Technical Field

The present teaching relates to a leaning vehicle, and more particularly to a leaning vehicle with two steerable front wheels.

### Background Art

Leaning vehicles are known. A leaning vehicle has a vehicle body that leans leftward when the vehicle turns left and leans rightward when the vehicle turns right. Some of such leaning vehicles have two steerable front wheels, for example, as disclosed in International Patent Application Publication No. WO 2019/044471 (Patent Literature 1). When the leaning vehicle turns, the two steerable front wheels lean together with the vehicle body. Thus, Patent Literature 1 discloses a leaning vehicle with two leaning and steerable front wheels.

For leaning vehicles with two leaning and steerable front wheels, for example, International Patent Application Publication No. 2014/046285 (Patent Literature 2) has suggested a joint mechanism that allows the two front wheels to be steered within a large angle range. For cars, for example, Japanese Patent Application Publication No. 2016-211671 (Patent Literature 3), Japanese Utility Model Application Publication No. H5-12738 (Patent Literature 4) have suggested joint mechanisms, and Japanese Patent Application Publication No. H01-229787 (Patent Literature 5).

### Citation List

### Patent Literatures

Patent Literature 1: International Patent Application Publication No. WO 2019/044471
Patent Literature 2: International Patent Application Publication No. 2014/046285
Patent Literature 3: Japanese Patent Application Publication No. 2016-211671
Patent Literature 4: Japanese Utility Model Application Publication No. H5-12738
Patent Literature 5: Japanese Patent Application Publication No. H01-229787

### Summary of Invention

### Technical Problem

In the joint mechanism for leaning vehicles disclosed in Patent Literature 2, a rotation shaft having a rotation axis extending in a forward- and-backward direction and a rotation shaft having a rotation axis extending in an upward-and-downward direction are positioned separately, and in order to prevent these rotation shafts from being in contact with each other, the joint mechanism as a whole must be made large. Consequently, the part around the two leaning and steerable front wheels increases in size.

Since the joint mechanisms disclosed in Patent Literatures 3 and 4 are for cars, it is difficult to use these joint mechanisms in leaning vehicles. Regarding the joint mechanism of Patent Literature 3, specifically, the tilt angle range and the rotation angle range of the ball stud are large, which allows the two front wheels to be steered within a sufficiently large steering angle range during leaning of the two front wheels. However, the joint mechanism has insufficient strength against a force of pulling out the ball stud, and therefore, it is difficult to use the joint mechanism in a leaning vehicle. The joint mechanism of Patent Literature 4 has a structure that provides sufficient strength against a force of pulling out the ball stud and against a force of pushing in the ball stud. However, the tilt angle range of the ball stud is small, and therefore, it is difficult to use the joint mechanism in a leaning vehicle.

An object of the present teaching is to provide a leaning vehicle with two leaning and steerable front wheels that is expanded in the steering angle range of the two front wheels during leaning of the two front wheels without causing an increase in the size of the part around the two front wheels.

### Solution to the Problem

A leaning vehicle according to an embodiment of the present teaching includes: a vehicle body that is capable of leaning leftward and rightward of the leaning vehicle; two front wheels that lean leftward and rightward together with the vehicle body and are steerable leftward and rightward; and a support mechanism that allows the two front wheels to be supported by the vehicle body and includes: a first member; a second member connected to the first member; and a joint mechanism that connects the first member and the second member in such a manner so as to allow the first member and the second member to be displaced relative to each other along with leaning of the two front wheels and to allow the first member and the second member to be displaced relative to each other along with steering of the two front wheels. The joint mechanism is a ball joint that connects the first member and the second member and includes: a ball stud including a spherical ball part and a bar-like first shaft; and a metal holder that holds the ball part in such a manner that the ball part is freely rotatable, the metal holder having an open end part pierced by the ball stud. The open end part is formed in such a manner that: the open end part has an inner edge including the open end part including a first inner edge part, a second inner edge part, a third inner edge part, and a fourth inner edge part; when the two front wheels are steered or leaned from their respective steering neutral and leaning neutral positions, the tilt angle of the ball stud varies between the first and second inner edge parts, which are each formed at positions outward from the circumference of a maximum width part of the ball part with respect to a direction perpendicular to a central axis of the ball stud that is in its steering neutral and leaning neutral position; and the third and fourth inner edge parts, which are each formed at positions inward from the circumference of the maximum width part of the ball part, are positioned separately between the first and second inner edge parts.

By positioning the joint mechanism in the above-defined leaning vehicle in such a manner that the tilt angle of the ball stud, which is variable between the first and second inner edge parts, or the rotation angle of the ball stud corresponds to the steering angle of the two front wheels, it is possible to expand the steering angle range of the two front wheels during leaning of the two front wheels. This will be described below.

First, a case in which the tilt angle of the ball stud, which is variable between the first and second inner edge parts, corresponds to the steering angle of the two front wheels will be described. In this case, when the two front wheels are steered from their respective steering neutral and leaning neutral positions, the tilt angle of the ball stud varies within the range between the first and second inner edge parts. Since the first and second inner edge part are formed at positions outward from the circumference of a maximum width part of the ball part, the first and second inner edge part do not impose such a strict restriction to the tilt angle of the ball stud. Accordingly, the tilt angle range of the ball stud becomes large. Even during leaning of the two front wheels, the ball stud can tilt at a large tilt angle within the range between the first and second inner edge parts. Thus, the steering angle range during leaning of the two front wheels can be expanded.

Next, a case in which the rotation angle of the ball stud corresponds to the steering angle of the two front wheels will be described. In this case, when the two front wheels are leaned from their respective steering neutral and leaning neutral positions, the tilt angle of the ball stud varies within the range between the first and second inner edge parts. The rotation angle of the ball stud is an angle by which the ball stud rotates around its central axis from a view looking in the extending direction of the central axis of the ball stud. Thus, the rotation angle of the ball stud is the rotation angle of the ball stud around its central axis. Since the ball part of the ball stud is held by the holder in such a manner as to be freely rotatable, the rotation angle range of the ball stud is large. Therefore, even while the two front wheels are leaning, the ball stud can tilt at a large angle. Accordingly, the steering angle range during leaning of the two front wheels can be expanded.

In the above-defined leaning vehicle, the joint mechanism is a ball joint, and the ball part of the ball stud is held by the holder in such a manner as to be freely rotatable. Therefore, the first member and the second member are allowed to be displaced relative to each other when the two front wheels are leaned and/or steered, and there is no need to increase the size of the part around the two front wheels. Especially, the third and fourth inner edge parts are separately formed between the first and second inner edge parts, at positions inward from the circumference of the maximum width part of the ball part, and accordingly, the third and fourth inner edge parts function as a stopper that stops the ball stud from being pulled out of the holder. This eliminates the need to increase the size of the ball part. As a result, the part around the two front wheels is prevented from increasing in size.

The leaning vehicle according to the embodiment of the present teaching may be a three-wheeled vehicle with one rear wheel as well or may be a four-wheeled vehicle with two rear wheels as well. The leaning vehicle may be a straddled vehicle. A straddled vehicle is a vehicle to be straddled by a rider. The leaning vehicle may be a vehicle with a sit-in type seat. The leaning vehicle may include a drive source that moves the vehicle body. The drive source may be of any type that provides a driving force to the leaning vehicle. The drive source may be an engine, an electric motor, or a combination of an engine and an electric motor. The leaning vehicle may include a shock absorber that absorbs load applied to the two front wheels. The leaning vehicle may include a steering mechanism that provides a mechanical connection between the steering handlebar and the two front wheels, or a steering mechanism that does not provide a mechanical connection between the steering handlebar and the two front wheels. The steering mechanism that does not provide a mechanical connection between the steering handlebar and the two front wheels, for example, includes a steering actuator that steers the two front wheels in accordance with the rider's manipulation of the steering handlebar.

In the embodiment of the present teaching, the vehicle body includes a vehicle body frame. The vehicle body frame may be a frame assembled from a plurality of components, or a frame formed as a one-piece body of a plurality of components. The material of the vehicle body frame may be metal such as aluminum, iron, or the like, synthetic resin such as CFRP or the like, or a combination of metal and synthetic resin. The vehicle body frame may be a monocoque type that is formed of exterior parts of the leaning vehicle or may be a semi-monocoque type, part of which also functions as the exterior of the leaning vehicle. The vehicle body, for example, is capable of leaning to the left and right of the leaning vehicle. For example, the vehicle body leans leftward when the leaning vehicle turns left and leans rightward when the leaning vehicle turns right.

In the embodiment of the present teaching, each of the two front wheels is supported by the vehicle body, for example, in such a manner as to be rotatable around an axis extending in the upward-and-downward direction of the vehicle body. The axis extending in the upward-and-downward direction of the vehicle body does not necessarily extend in the vertical direction when the vehicle body is in an upright position. The axis extending in the upward-and-downward direction of the vehicle body may tilt backward, with respect to the vehicle body, from the vertical direction when the vehicle body is in the upright position. In other words, when the vehicle body is in the upright position, the upper end of the axis extending in the upward-and-downward direction of the vehicle body may be positioned more backward than the lower end of the axis extending in the upward-and-downward direction of the vehicle body. The two front wheels are arranged, for example, side by side in the leftward-and-rightward direction of the leaning vehicle.

In the embodiment of the present teaching, the support mechanism that allows the two front wheels to be supported by the vehicle body, for example, includes a mechanism that leans the two front wheels to the left or right of the leaning vehicle together with the vehicle body. The support mechanism, for example, includes a mechanism that steers the two front wheels to the left or right of the leaning vehicle. The support mechanism, for example, includes a suspension. The suspension is, for example, an independent suspension. The first member and the second member are only required to have a mutual relationship that allows the first member and the second member to be displaced relative to each other along with leaning of the two front wheels and to be displaced relative to each other along with steering of the two front wheels. Either of the first member or the second member is, for example, a tie rod. The other of the first member or the second member is, for example, a knuckle that swings around a steering axis of each of the two front wheels, or a pitman arm that swings around a swing axis extending in the upward-and-downward direction. The first member and the second member are not limited to a tie rod, a knuckle, or a pitman arm. The support mechanism may include a plurality of first members and/or a plurality of second members. In this case, the leaning vehicle includes a plurality of joint mechanisms.

In the embodiment of the present teaching, the ball stud is, for example, made of metal. For example, the ball part and the first shaft are made of metal. It is only necessary that the surface of the ball part is partly spherical. The ball part is, for example, connected to the first shaft. The means of connecting the ball part and the first shaft includes forming the ball part and the first shaft as a one-piece body. The first shaft, for example, functions to connect the first member or the second member to the ball stud. The first shaft, for example, may include a bolt part with an external male thread. The first shaft, for example, may have a hole on the outer surface. The first shaft, for example, may include a nut with an interior female thread. The cross-section of the first shaft in a place perpendicular to the central axis of the first shaft may be, for example, circular or polygonal. The central axis of the first shaft, for example, passes through the center of the ball part. The center of the ball part is the center of a circle that indicates the outer edge of the ball part when the ball part is cut in a plane perpendicular to the central axis of the first shaft. More specifically, the center of the ball part is the center of the circular cross section with a maximum diameter which is obtained when the ball part is cut at the maximum width part. Thus, the center of the ball part means the center of the circle that indicates the circumference of the maximum width part of the ball part from a view looking in the extending direction of the central axis of the ball stud. The central axis of the first shaft does not necessarily pass through the center of the ball part. In other words, from a view looking in the extending direction of the central axis of the ball stud, the center of the ball part may be off the central axis of the first shaft. The central axis of the ball stud, for example, may be the same as the central axis of the first shaft or may be parallel to the central axis of the first shaft. For example, a member that is made of a softer material than both the ball part and the holder is positioned between the ball part and the holder. For example, a resin member can be used as the member. This member reduces the friction between the ball part and the holder. When the ball stud is in its steering neutral and leaning neutral position, the central axis of the ball stud, for example, passes through the center of the open end part of the holder. In this case, from a view looking in the extending direction of the ball stud in its steering neutral and leaning neutral position, the center of the open end part of the holder is, for example, at the same position as the center of the ball part.

In the embodiment of the present teaching, for example, from a view looking in the extending direction of the ball stud in its steering neutral and leaning neutral position, the open end part is formed to surround the central axis of the ball stud from a view looking in the extending direction of the ball stud in its steering neutral and leaning neutral position. The inner edge of the open end part includes a first inner edge part, a second inner edge part, a third inner edge part, and a fourth inner edge part. For example, the first inner edge part, the second inner edge part, the third and fourth inner edge parts may form only part of the inner edge. Each of the first inner edge part, the second inner edge part, the third and fourth inner edge parts may be a straight line, a curved line, or a combination of a curved line and a straight line. The first and second inner edge parts of the inner edge are at positions outward from the circumference of the maximum width part of the ball part with respect to a direction perpendicular to the central axis of the ball stud in its steering neutral and leaning neutral position. In other words, the first and second edge parts are the parts of the inner edge that are positioned at longer distances, with respect to a direction perpendicular to the central axis of the ball stud in its steering neutral and leaning neutral position, from the central axis of the ball stud than the distance between the central axis of the ball stud and the circumference of the maximum width part of the ball part. The first and second inner edge parts may be at the same position or at different positions with respect to the direction parallel to the central axis of the ball stud in its steering neutral and leaning neutral position. The third and fourth inner edge parts are the parts of the inner edge that are positioned inward from the circumference of the maximum width part of the ball part with respect to the direction perpendicular to the central axis of the ball stud in its steering neutral and leaning neutral position. In other words, the third and fourth inner edge parts are the parts of the inner edge that are positioned at shorter distances, with respect to the direction perpendicular to the central axis of the ball stud in its steering neutral and leaning neutral position, from the central axis of the ball stud than the distance between the central axis of the ball stud and the circumference of the maximum width part of the ball part. The third and fourth inner edge parts may be at the same position or at different positions with respect to the direction parallel to the central axis of the ball stud in its steering neutral and leaning neutral position. From a view looking in the extending direction of the central axis of the ball stud in its steering neutral and leaning neutral position, the first and second inner edge parts are formed, for example, in such a manner as to be line symmetry with respect to a line perpendicular to the central axis of the ball stud. From a view looking in the extending direction of the central axis of the ball stud in its steering neutral and leaning neutral position, the first and second inner edge parts are formed, for example, in such a manner as to be point symmetry with respect to the central axis of the ball stud. From a view looking in the extending direction of the central axis of the ball stud in its steering neutral and leaning neutral position, the third and fourth inner edge parts are formed, for example, in such a manner as to be line symmetry with respect to a line perpendicular to the central axis of the ball stud. From a view looking in the extending direction of the central axis of the ball stud in its steering neutral and leaning neutral position, the third and fourth inner edge parts are formed, for example, in such a manner as to be point symmetry with respect to the central axis of the ball stud. For example, the first and second inner edge parts are longer than the third and fourth inner edge parts. From a view looking in the extending direction of the central axis of the ball stud in its steering neutral and leaning neutral position, the distance between the first and second inner edge parts is longer than the diameter of the ball part, and the distance between the third and fourth inner edge parts is shorter than the diameter of the ball part.

In the embodiment of the present teaching, the tilt angle of the ball stud is the tilt angle of the ball stud relative to the holder. The variable range of the tilt angle of the ball stud is determined by the shape of the ball stud and the shape of the open end part of the holder. The ball stud is kept from being pulled out of the holder by the third and fourth inner edge parts of the open end part of the holder. The third and fourth inner edge parts permit the ball joint to have sufficient strength in the pull-out direction. The strength of the ball joint in the pull-out direction is how hard it is for the ball stud to come off the holder. A ball joint has a trade-off problem between an expansion in the variable range of the tilt angle of the ball stud and the maintenance of the durability of the ball joint. The variable range of the tilt angle of the ball stud is designed, for example, depending on the required performance of the leaning vehicle.

In the embodiment of the present teaching, the rotation angle of the ball stud of a ball joint is the rotation angle of the ball stud relative to the holder. The variable range of the rotation angle of the ball stud of a ball joint is not necessarily determined by the shape of the ball stud and the shape of the open end part of the holder. The variable range of the rotation angle of the ball stud of the ball joint is designed, for example, depending on the required performance of the leaning vehicle.

In the embodiment of the present teaching, the variable range of the tilt angle of the ball stud and the rotation angle of the ball stud, for example, have a mutual relation such that the tilt angle of the ball stud becomes smaller as the ball stud rotates clockwise or counterclockwise from the position where the ball stud is tilted at the maximum tilt angle. The relation between the tilt angle and the rotation angle of the ball stud is, for example, such that the tilt angle of the ball stud becomes smaller continuously during the rotation of the ball stud. Alternatively, the relation between the tilt angle and the rotation angle of the ball stud is, for example, such that the tilt angle of the ball stud becomes smaller intermittently during the rotation of the ball stud.

In the leaning vehicle according to the embodiment of the present teaching, the open end part is preferably formed in such a manner that the first and second inner edge parts are positioned between the center of the ball part and the ball-side end (the end near the ball part) of the first shaft with respect to the direction parallel to the central axis of the ball stud in its steering neutral and leaning neutral position and that the ball-side end of the first shaft is positioned between either of the first or second inner edge part and either of the third or fourth inner edge part with respect to the direction parallel to the central axis of the ball stud that is in its steering neutral and leaning neutral position.

With the arrangement, the third and fourth inner edge parts function as a stopper that stops the ball stud from being pulled out of the holder. This eliminates the need to increase the size of the ball part. As a result, the part around the two front wheels is prevented from increasing in size.

In the embodiment of the present teaching, the ball-side end of the first shaft, for example, includes an end to be connected to the ball part. The end of the first shaft to be connected to the ball part, for example, is connected to an end of the ball part to be connected to the first shaft. The end of the ball part to be connected to the first shaft, for example, includes a first-shaft-side end of the spherical surface of the ball part.

In the leaning vehicle according to the embodiment of the present teaching, the open end part is formed in such a manner that the first and second inner edge parts allow the tilt angle of the ball stud to be variable within the range of ±25 degrees from the steering neutral and leaning neutral position.

With this arrangement, the variable range of the tilt angle of the ball stud is large. Accordingly, when the tilt angle of the ball stud corresponds to the steering angle of the two front wheels, the steering angle range during leaning of the two front wheels can be expanded. Regarding the mark "±", the positive mark (+) shows the direction of the tilt angle toward either one of the first or second inner edge part, and the negative mark (-) shows the direction of the tilt angle toward the other of the first or second inner edge part.

In the leaning vehicle according to the embodiment of the present teaching, the tilt angle of the ball stud may be limited by contact of the ball stud with a part other than the inner edge of the open end part.

In the embodiment of the present teaching, the contact of the ball stud with a part other than the inner edge of the open end part, for example, includes contact of the ball stud with a stopper. The stopper, for example, is attached to the leaning vehicle. Alternatively, even when the ball joint is not attached to the leaning vehicle, that is, with the ball joint alone, the tilt angle of the ball stud may be limited by contact of the ball stud with a part other than the inner edge of the open end part. In this case, in the open end part of the holder, a contact edge may be formed at a different position from the position of the inner edge of the open end part with respect to the direction parallel to the central axis of the ball stud in its steering neutral and leaning neutral position, or alternatively, may be formed at a different position from the position of the inner edge of the open end part with respect to a direction perpendicular to the central axis of the ball stud in its steering neutral and leaning neutral position.

In addition to the open end part pierced by the ball stud (which will hereinafter be referred to as a first open end part), the holder has another open end part (which will hereinafter be referred to as a second open end part), which is to be covered by a cap. The first open end part includes the first inner edge part, the second inner edge part, the third inner edge part, and the fourth inner edge part. The second open end part is covered by a cap in such a manner that the ball part of the ball stud is kept in the holder with the ball stud piercing through the first open end part. Keeping the ball part of the ball stud in the holder, for example, includes keeping the ball part of the ball stud in the holder in such a manner as to prevent the ball part from coming off from the holder. The cap is made of, for example, metal. The second open end part has a diameter larger than the diameter of the ball part so that the ball part can pass through the second open end part at the time of assembly of the ball joint. The cap covers at least part of the second open end part so as to prevent the ball part from passing through the second open end part. The cap is fixed to the holder. Thus, the holder is structured in such a manner that: the distance between the first and second inner edge parts of the first open end part is greater than the diameter of the ball part, while the distance between the third and fourth inner edge parts of the first open end part of the holder is smaller than the diameter of the ball part; and additionally, a cap is attached to the second open end part to prevent the ball part from coming off from the holder through the second open end part. These arrangements make it possible to efficiently achieve both an expansion in the steering angle range and sufficient strength both in the pull-out direction and the push-in direction. Further, when a friction-reducing member is inserted between the ball part and the holder, this member is, for example, made of a material softer than the cap.

Some embodiments of the present teaching will hereinafter be described in detail with reference to the drawings, and the detailed description of the embodiments will provide a clearer picture of the above-mentioned object and other objects, the features, the aspects and the advantages of the present teaching. The term "and/or" used herein includes one of the associated items in a list and all possible combinations of the associated items. The terms "including", "comprising", or "having", and variations thereof used herein specify the presence of stated features, steps, operations, elements, components, and/or equivalents thereof, and can include one or more of steps, operations, elements, components, and/or their groups. Unless otherwise defined, all terms (including technical and scientific terms) used herein have the same meanings as commonly understood by one of ordinary skill in the art to which the present teaching pertains. It should be understood that terms, such as those defined in commonly used dictionaries, should be interpreted as having meanings that are consistent with their meanings in the context of the present disclosure and relevant art and should not be interpreted in an idealized or overly formal sense unless expressly so defined herein. It should be understood that the description of the present teaching discloses a number of techniques and steps. Each of these has individual benefit, and each can also be used in conjunction with one or more, or in some cases with all, of the other disclosed techniques. Accordingly, for the sake of clarity, this description will refrain from repeating every possible combination of the individual steps in an unnecessary fashion.

The invention is defined by the appended claims.

In the description given below, for the purpose of explanation, numerous specific details are set forth in order to provide a complete understanding of the present teaching. It will be apparent, however, that those skilled in the art may practice the present teaching without these specific details. The present disclosure is to be considered as an exemplification of the present teaching and is not intended to limit the present teaching to the specific embodiments illustrated by drawings or descriptions below.

### Effect of Invention

The present teaching provides a leaning vehicle with two leaning and steerable front wheels that is expanded in the steering angle range during leaning of the two front wheels without causing an increase in the size of the part around the two front wheels.

### Brief Description of Drawings

[FIG. 1] FIG. 1 is an illustrative diagram including: a perspective view of a leaning vehicle according to an embodiment of the present teaching; a back view and a plan view of a support mechanism of the leaning vehicle; and a perspective view of a ball joint of the leaning vehicle.
[FIG. 2] FIG. 2 is an illustrative diagram including: sectional views of the ball joint of the leaning vehicle shown in FIG. 1; and a plan view showing the relationship between a ball part of a ball stud and the inner edge of an open end part of a holder.
[FIG. 3] FIG. 3 is an illustrative diagram including: sectional views of conventional ball joints; and a sectional view of the ball joint of the leaning vehicle shown in FIG. 1.
[FIG. 4] FIG. 4 is a plan view of a modification of the support mechanism of the leaning vehicle.

### Description of Embodiments

A leaning vehicle according to an embodiment of the present teaching will hereinafter be described in detail with reference to the drawings. The embodiment described below is merely an example. The present teaching shall not be understood to be limited to the embodiment below.

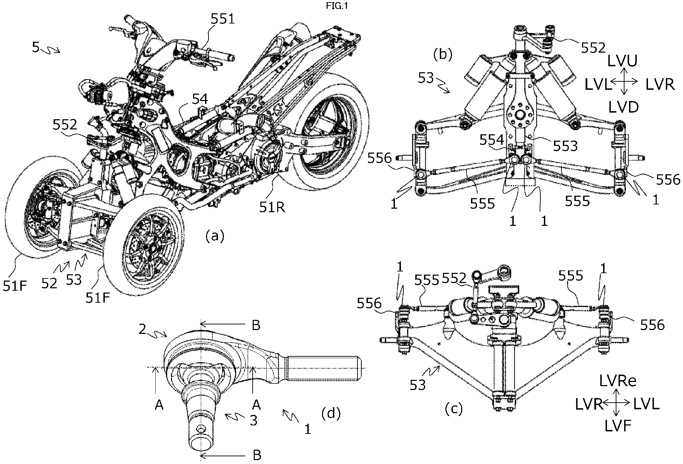

With reference to FIG. 1, a leaning vehicle 5 will be described. FIG. 1 includes: (a) a perspective view of the leaning vehicle 5; (b) a back view of a leaning linkage mechanism 53 contained in the leaning vehicle 5; (c) a plan view of the leaning linkage mechanism 53; and (d) a perspective view of a ball joint 1 that serves as a joint mechanism in the leaning vehicle 5.

The leaning vehicle 5 includes a vehicle body 54, two front wheels 51F, one single rear wheel 51R, and a support mechanism 52. Various directions relative to the leaning vehicle 5 are directions from the perspective of a rider riding the leaning vehicle 5.

The vehicle body 54 is capable of leaning to the left and right of the leaning vehicle 5. The two front wheels 51F lean to the left and right of the leaning vehicle 5 together with the vehicle body 54, and are steerable to the left and right of the leaning vehicle 5. The single rear wheel 51R is supported by the vehicle body 54. The single rear wheel 51R leans to the left and right of the leaning vehicle 5 together with the vehicle body 54.

The support mechanism 52 includes a leaning linkage mechanism 53. The leaning linkage mechanism 53 allows the vehicle body 54 and the two front wheels 51F to lean to the left or right of the leaning vehicle 5 when the leaning vehicle 5 turns left or right. Thus, when the leaning vehicle 5 is turning left or right, the vehicle body 54 and the two steerable wheels 51F lean to the left or right of the leaning vehicle 5.

The support mechanism 52 includes a steering handlebar 551 to be manipulated by a rider, a steering linkage 552, a swing shaft 553, pitman arms 554, tie rods 555, and knuckles 556. The steering handlebar 551 is swingably supported by the vehicle body. The steering handlebar 551 is connected to the swing shaft 553 via the steering linkage 552. The swing shaft 553 swings around a swing axis extending in the upward-and-downward direction. The pitman arms 554 are supported by the swing shaft 553 in such a manner as to swing together with the swing shaft 553. Each of the tie rods 555 has an end (which will hereinafter be referred to as a first end) that is connected to the corresponding one of the pitman arms 554, and another end (which will hereinafter be referred to as a second end) that is connected to the corresponding one of the knuckles 556. With this mechanism, a swing of the steering handlebar 551 caused by the rider's manipulation is transmitted to the steering linkage 552, the swing shaft 553, the pitman arms 554, the tie rods 555 and then to the knuckles 556. The knuckles 556 swing around a steering axis. Accordingly, the two front wheels 51F swing around the steering axis. Thereby, the two front wheels 51F are steered.

In the support mechanism 52, the tie rods 555 (which are examples of first members) and the pitman arms 554 (which are examples of second members) are connected by ball joints 1 (which are examples of joint mechanisms). In other words, each of the tie rods 555 is connected to the corresponding one of the pitman arms 554 via a ball joint 1. In a similar manner, the tie rods 555 (which are examples of first members) and the knuckles 556 (which are examples of second members) are connected by ball joints 1. In other words, each of the tie rods 555 is connected to the corresponding one of the knuckles 556 via a ball joint 1.

The ball joint 1 between each of the tie rods 555 and the corresponding one of the pitman arms 554 connects the tie rod 555 and the pitman arm 554 in such a manner as to allow the tie rod 555 and the pitman arm 554 to be displaced relative to each other along with leaning of the two front wheels 51F and to allow the tie rod 555 and the pitman arm 554 to be displaced relative to each other along with steering of the two front wheels 51F.

The ball joint 1 between each of the tie rod 555 and the corresponding one of the knuckles 556 connects the tie rod 555 and the knuckle 556 in such a manner as to allow the tie rod 555 and the knuckle 556 to be displaced relative to each other along with leaning of the two front wheels 51F and to allow the tie rod 555 and the knuckle 556 to be displaced relative to each other along with steering of the two front wheels 51F.

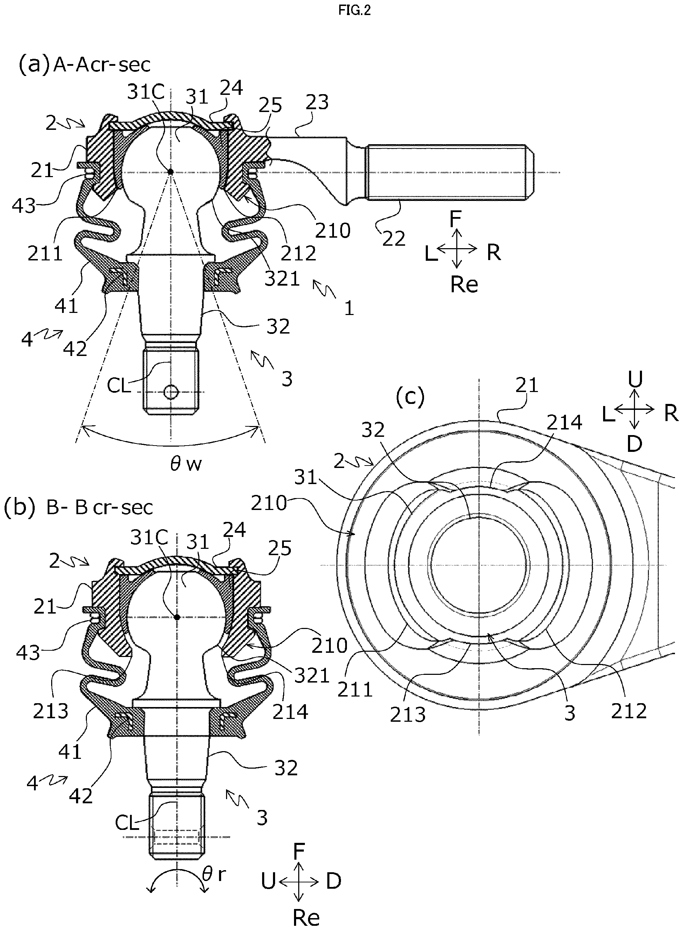

Next, with reference to FIGS. 1 and 2, the ball joint 1 will be described. The ball joint 1 includes a ball stud 3, a holder 2, and a cover 4. FIG. 1 shows the ball joint 1 with the cover 4 removed. FIG. 2 includes: (a) a sectional view of the ball joint 1 along line A-A; (b) a sectional view of the ball joint 1 along line B-B; and (c) a partial plan view of the ball joint 1. FIG. 2(c) omits a slide member 25 for a clear illustration of the relationship between each of a first inner edge part 211, a second inner edge part 212, a third inner edge part 213 and a fourth inner edge part 214 at an open end part 21 and a ball part 31 of the ball stud 3.

The ball joint 1 is illustrated in a coordinate system in which the leftward-and-rightward direction and the upward-and-downward direction are defined when the open end part of the holder 2 is viewed from a point in the extending direction of the central axis CL of the ball stud 3 in the steering neutral and leaning neutral position. The direction in which the second shaft 22 of the holder 2 extends is defined as the right. Along the central axis CL of the ball stud 3 in the steering neutral and leaning neutral position, the direction from the open end part into the holder 2 is defined as the front. Directions in the coordinate system in which the ball joint 1 is illustrated may be same or may be different with directions in the coordinate system in which the leaning vehicle 5 is illustrated. These two coordinate systems are independent of each other. FIGS. 1 and 2 show the position of the ball stud 3 when the two front wheels 51F are in their respective steering neutral and leaning neutral positions.

The ball stud 3 includes a spherical ball part 31 and a bar-like first shaft 32. The ball stud 3 is made of metal. The holder 2 holds the ball part 31 in such a manner that the ball part 31 is freely rotatable. The holder 2 is made of metal.

The holder 2 includes: a body 21 having an open end part 210 pierced by the ball stud 3; a bar-like second shaft 22 having an axis extending rightward; a connection part 23 connecting the body 21 and the second shaft 22; and a cap 24 that defines a space for the ball part 31 in the body 21. After the ball stud 3 is fixed to the body 21, the cap 24 is attached to the body 21 in such a manner as to cover another open end of the body 21. The cap 24 functions as a stopper that stops the ball stud 3 from being pushed into the holder 2 any further. As will be described later, the third inner edge part 213 and the fourth inner edge part 214 function as a stopper that stops the ball stud 3 from being pulled out of the holder 2. Between the body 21 and the ball part 31, a resin slide member 25 is positioned. The resin slide member 25 is formed into a shape that fits in between the body 21 and the ball part 31.

The cover 4 is elastically deformable. The cover 4 includes a cover body 41, a metal core 42, and a clip 43. The cover body 41 is formed from an elastically deformable material. The metal core 42 is formed integrally with the cover body 41. The first shaft 32 of the ball stud 3 pierces through the metal core 42. The cover 4 elastically deforms when the ball joint 1 tilts.

The open end part 210 includes at least a first inner edge part 211, a second inner edge part 212, a third inner edge part 213, and a fourth inner edge part 214. The first inner edge part 211 and the second inner edge part 212 are formed at positions outward from the circumference of the maximum width part of the ball part 31 with respect to a direction perpendicular to the central axis CL of the ball stud 3 in its steering neutral and leaning neutral position. The third inner edge part 213 and the fourth inner edge part 214 are formed at positions inward from the circumference of the maximum width part of the ball part 31 with respect to a direction perpendicular to the central axis CL of the ball stud 3 in its steering neutral and leaning neutral position. The third inner edge part 211 and the fourth inner edge part 214 are formed at separate positions between the first inner edge part 211 and the second inner edge part 212.

The open end part 210 is formed in such a manner that the tilt angle θw of the ball stud 3 varies between the first inner edge part 211 and the second inner edge part 212 when the two front wheels 51F are steered from their respective steering neutral and leaning neutral positions. In other words, in the leaning vehicle 5, the ball joint 1 is arranged in such a manner that the tilt angle θw of the ball stud 3, which is variable between the first inner edge part 211 and the second inner edge part 212, corresponds to the steering angle of the two front wheels 51F.

The open end part 210 is formed in such a manner that the first inner edge part 211 and the second inner edge part 212 are positioned between the center 31C of the ball part 31 and the ball-side end 321 of the first shaft 32 with respect to the direction parallel to the central axis CL of the ball stud 3 in the steering neutral and leaning neutral position. Further, the open end part 210 is formed in such a manner that the ball-side end 321 of the first shaft 32 is positioned between either of the first inner edge part 211 or the second inner edge part 212 and either of the third inner edge part 213 or the fourth inner edge part 214 with respect to the direction parallel to the central axis CL of the ball stud 3 in the steering neutral and leaning neutral position.

The open end part 210 is formed in such a manner that the first inner edge part 211 and the second inner edge part 212 allow the tilt angle θw of the ball stud 3 to be variable within the range of ±25 degrees from the position in the steering neutral and leaning neutral position.

In the leaning vehicle 5, the ball joint 1 is arranged in such a manner that the tilt angle θw of the ball stud 3, which is variable between the first inner edge part 211 and the second inner edge part 212, corresponds to the steering angle of the two front wheels 51F. Thereby, the steering angle range during leaning of the two front wheels 51F can be expanded.

Specifically, when the two front wheels 51F are steered from their respective steering neutral and leaning neutral positions, the tilt angle θw of the ball stud 3 varies between the first inner edge part 211 and the second inner edge part 212. The first inner edge part 211 and the second inner edge part 212 are formed at positions outward from the circumference of the maximum width part of the ball part 31, and accordingly, the variable range of the tilt angle θw of the ball stud 3, which is limited by the first inner edge part 211 and the second inner edge part 212, is not restricted so strictly. As a result, a large tilt angle θw of the ball stud 3 can be obtained. Even while the two front wheels 51F are leaning, since the tilt angle θw of the ball stud 3 is variable between the first inner edge part 211 and the second inner edge part 212, the tilt angle range of the ball stud 3 becomes large. Thus, the steering angle range during leaning of the two front wheels 51F can be expanded.

In the leaning vehicle 5, the ball joint 1 is used as the joint mechanism. Therefore, the ball part 31 of the ball stud 3 can be supported by the holder 2 in such a manner to be freely rotatable, and the tie rod 555 is allowed to be displaced relative to the pitman arm 554 or the knuckle 556 when the two front wheels 51F are leaned and/or steered. This does not cause an increase in the size of the part around the two front wheels 51F. Additionally, the third inner edge part 213 and the fourth inner edge part 214, which are formed at positions inward from the circumference of the maximum width part of the ball part 31, are positioned between the first inner edge part 211 and the second edge part 212 separately, and the third inner edge part 213 and the fourth inner edge part 214 function as a stopper that stops the ball stud 3 from being pulled out of the holder 2. This eliminates the need to increase the size of the ball part 31. Therefore, the part around the two front wheels 51F is not increased in size.

The reason why the ball stud 3 is required to be hard to come off from the holder 2 is as follows: in a case in which the ball joint 1 is used as a joint mechanism that connects a tie rod 555 with a pitman arm 554 or a knuckle 556, when a disturbance is applied to the front wheels 51F or the steering handlebar 551 during steering of the two front wheels 51F, the connection part between the tie rod 555 and the pitman arm 553 or between the tie rod 555 and the knuckle 556 needs a certain level of strength against a force of pulling out the ball stud 3. Even when the leaning vehicle 5 includes a steering mechanism that does not provide a mechanical connection between the steering handlebar 551 and the two front wheels 51F, that is, even when a steering actuator operates to steer the two front wheels 51F in accordance with manipulation applied to the steering handlebar 551, the ball joint 1 is required to have a specific level of strength against a force of pulling out the ball stud 3 so that the steering actuator can continuously control the steering angle against the disturbance inputted to the two front wheels 51F.

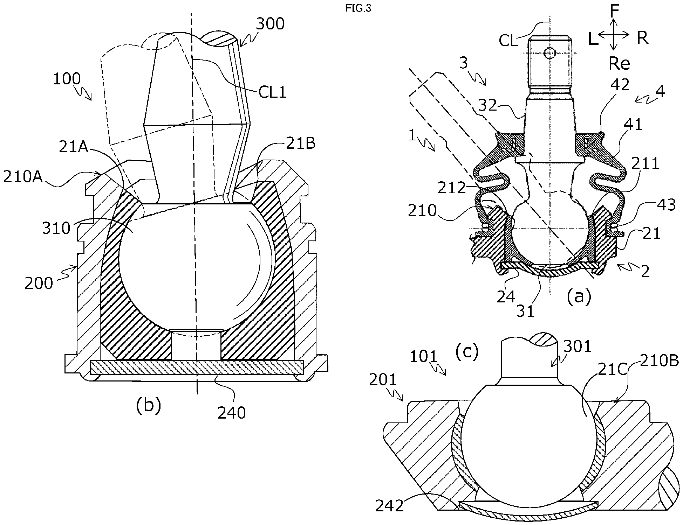

With reference to FIG. 3, the ball joint 1 will be described in more detail. FIG. 3(a) shows the ball joint 1. FIGS. 3(b) and 3(c) show ball joints 100 and 101, respectively, which have structures of comparative examples. In FIGS. 3(b) and 3(c), the left half and the right half of the drawing show different sections of the ball joint 100 or 101. Specifically, the left half of the drawing shows a sectional view of the ball joint 100 or 101 on a plane rotated by 90 degrees around the central axis of the ball stud 300 or 301 from the plane of the sectional view shown in the right half of the drawing. The following descriptions of the ball joints 100 and 101 shown in FIGS. 3(b) and 3(c) are about hypothetical cases in which these ball joints 100 and 101 are used in a leaning vehicle. However, the descriptions do not show that the ball joints 100 and 101 shown in FIGS. 3(b) and 3(c) are usable in a leaning vehicle.

In the ball joint 100, the body of the holder 200 has an open end part 210A, and the open end part 210Aincludes two inner edge parts 21A and two inner edge parts 21B. The two inner edge parts 21B are separately positioned between the two inner edge parts 21A. In other words, the two inner edge parts 21A and the two inner edge parts 21B are arranged alternately along the circumference of the open end part 210A. In the ball joint 101, the body of the holder 201 has an open end part 210B, and the open end part 210B has an inner edge 21C on the entire circumference. The inner edge parts 21A and the inner edge parts 12B are formed at positions inward from the circumference of the maximum width part of the ball part 310, with respect to directions perpendicular to the central axis CL1 of the ball stud 300 in the steering neutral and leaning neutral position. As compared with the inner edge parts 21A, the inner edge parts 21B are positioned more inward from the circumference of the maximum width part of the ball part 310, with respect to the directions perpendicular to the central axis CL1 of the ball stud 300 in the steering neutral and leaning neutral position. Thus, all the inner edge parts 21A and the inner edge parts 21B function as a stopper that stops the ball stud 300 from being pulled out of the holder 200. Therefore, the ball stud 300 is inserted upward in FIG. 3(a) into the body of the holder 200 through another open end part (a second open end part). After the ball stud 300 is inserted in the body of the holder 200, a cap 240 is attached to the body of the holder 200 in such a manner as to cover the second open end part of the body of the holder 200. The cap 240 functions as a stopper that stops the ball stud 300 from being pushed into the holder 200 any further.

In the ball joint 100, even the inner edge parts 21A, which are positioned outward from the inner edge parts 21B with respect to the directions perpendicular to the central axis CL of the ball stud 300 in the steering neutral and leaning neutral position, are positioned inward from the circumference of the maximum width part of the ball part 310 with respect to the direction perpendicular to the central axis CL1 of the ball stud 300 in the steering neutral and leaning neutral position. Accordingly, as compared with the ball joint 1, the tilt angle range of the ball stud 300 is smaller. Therefore, when the ball joint 100 is used in a leaning vehicle, it is difficult to expand the steering angle range during leaning of two front wheels. In order to clearly illustrate the difference between the tilt angle range of the ball stud 3 and the tilt angle range of the ball stud 300, in FIG. 3, the positions of the ball studs 3 and 300 tilted at their respective maximum tilt angles are shown by phantom lines. However, when the ball joints 1 and 100 are practically used, stoppers are attached so as to limit the tilt angles of the ball studs 3 and 300 to smaller angles than their respective maximum tilt angles. Even if such stoppers are attached, it makes no difference as to the fact that the tilt angle range of the ball stud 3 of the ball joint 1 is greater than the tilt angle range of the ball stud 300 of the ball joint 100.

In the ball joint 101, a cap 242 functions as a stopper that stops the ball stud 301 from being pushed into the holder 201 any further. However, the ball stud 301 is inserted downward in FIG. 3(c) into the holder 201 at the time of assembly of the ball joint 101, and the ball joint 101 lacks in the strength against a force of pulling the ball stud 301 out of the holder 201. Specifically, in assembling the ball joint 101, the ball stud 301 is inserted in the holder 201 through the open end part 210B of the holder 201, which means that the ball stud 301 passes through the open end part 210B, and accordingly, the ball joint 101 lacks in the strength against a force of pulling the ball stud 301 out of the holder 201. Therefore, it is difficult to use the ball joint 100 in a leaning vehicle.

### [Modification of Support Mechanism]

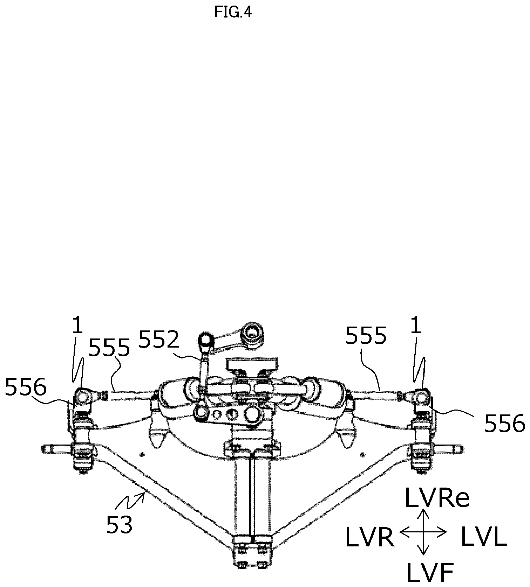

With reference to FIG. 4, a modification of the support mechanism 52 will be described. In a support mechanism 52A according to the modification, the ball joint 1 is positioned in such a manner that the rotation angle θr of the ball stud 3 corresponds to the steering angle of the two front wheels 51F (not shown in FIG. 4) compared to the support mechanism 52. The rotation angle θr of the ball stud 3 means the rotation angle of the ball stud 3 around the central axis CL. In this modification also, the steering angle range during leaning of the two front wheels 51F can be expanded.

Specifically, the ball part 31 of the ball stud 3 is supported by the holder 2 to be freely rotatable, and therefore, when the two front wheels 51F are steered from their respective steering neutral and leaning neutral positions, the ball stud 3 rotates around the central axis CL. Thus, the variable range of the rotation angle θr of the ball stud 3 is large. Even while the two front wheels 51F are leaning, the variable range of the rotation angle θr of the ball stud 3 is large. Accordingly, the steering angle range during leaning of the two front wheels 51F can be expanded.

### (Other Embodiments)

The embodiments and modifications described herein and/or illustrated by the drawings are to make the present teaching easier to understand and not to limit the concept of the present teaching.

The invention is limited by the appended claims.

The limitations in the claims are to be interpreted broadly based on the language employed in the claims and not limited to the embodiments described in the present specification or during the prosecution of the present application. Such embodiments and modifications are to be understood as non-exclusive. For example, the terms "preferable" and "good" in the present specification are to be understood as non-exclusive, and these terms mean "preferable but not limited to this" and "good but not limited to this", respectively.

### Reference Signs List

1: ball joint
2: holder
3: ball stud
5: leaning vehicle
21: body
31: ball part
32: first shaft
51F: two front wheels
52: support mechanism
54: vehicle body
210: open end part
211: first inner edge part
212: second inner edge part
213: third inner edge part
214: fourth inner edge part
554: pitman arm
555: tie rod
556: knuckle
θr: rotation angle
θ_{w}: tilt angle

## Claims

1. A leaning vehicle (5) comprising:
a vehicle body (54) that is capable of leaning leftward and rightward of the leaning vehicle (5);
two front wheels (51F) that are configured to lean leftward and rightward together with the vehicle body (54) and are steerable leftward and rightward; and
a support mechanism (52) that is configured to allow the two front wheels (51F) to be supported by the vehicle body (54) and includes: a first member (555); a second member (554); and a joint mechanism that connects the first member (555) and the second member (554) in such a manner so as to allow the first member (555) and the second member (554) to be displaced relative to each other along with leaning of the two front wheels (51F) and to allow the first member (555) and the second member (554) to be displaced relative to each other along with steering of the two front wheels (51F),
wherein:
the joint mechanism is a ball joint (1) that connects the first member (555) and the second member (554), the joint mechanism including:
a ball stud (3) including a spherical ball part (31) and a bar-like first shaft (32); and
a metal holder (2) that holds the ball part (31) in such a manner that the ball part (31) is freely rotatable, the metal holder (2) having an open end part (210) pierced by the ball stud (3); and
the open end part (210) is formed in such a manner that:
the open end part (210) has an inner edge including a first inner edge part (211), a second inner edge part (212), a third inner edge part (213), and a fourth inner edge part (214);
the first and second inner edge parts (211, 212) are each formed at positions outward from the circumference of a maximum width part of the ball part (31) with respect to a direction perpendicular to a central axis (CL) of the ball stud (3) that is in its steering neutral and leaning neutral position,
the third and fourth inner edge parts (213, 214) are positioned separately between the first and second inner edge parts (211, 212), the third and fourth inner edge parts (213, 214) however, are each formed at positions inward from the circumference of the maximum width part of the ball part (31),
when the two front wheels (51F) are steered or leaned from their respective steering neutral and leaning neutral positions, the tilt angle of the ball stud (3) varies between the first and second inner edge parts (211, 212).

2. The leaning vehicle (5) according to claim 1, wherein:
the open end part (210) is formed in such a manner that:
with respect to a direction parallel to the central axis (CL) of the ball stud (3) that is in its steering neutral and leaning neutral position, the first and second inner edge parts (211, 212) are positioned between the center of the ball part (31) and a ball-side end of the first shaft (32); and
with respect to the direction parallel to the central axis (CL) of the ball stud (3) that is in its steering neutral and leaning neutral position, the ball-side end of the first shaft (32) is positioned between either of the first or second inner edge part (211, 212) and either of the third or fourth inner edge part (213, 214).

3. The leaning vehicle (5) according to claim 1 or 2, wherein
the open end part (210) is formed in such a manner that the first and second inner edge parts (211, 212) are formed to allow the tilt angle of the ball stud (3) to be variable within a range of ± 25 degrees from the steering neutral and leaning neutral position of the ball stud (3).

4. The leaning vehicle (5) according to any one of claims 1 to 3, wherein
the tilt angle of the ball stud (3) is limited by contact of the ball stud (3) with any part that is other than the inner edge of the open end part (210).

5. The leaning vehicle (5) according to any one of claims 1 to 4, wherein
the tilt angle of the ball stud (3), which is variable between the first and second inner edge parts (211, 212), corresponds to a steering angle at which the two front wheels (51F) are steered; and
even while the two front wheels (51F) are leaning, the tilt angle of the ball stud (3) is variable between the first and second inner edge parts (211, 212).

## Patentansprüche

1. Ein Neigungsfahrzeug (5), das folgende Merkmale aufweist:
einen Fahrzeugkörper (54), der in der Lage ist, sich nach links und nach rechts des Neigungsfahrzeugs (5) zu neigen;
zwei Vorderräder (51F), die dazu ausgebildet sind, sich zusammen mit dem Fahrzeugkörper (54) nach links und nach rechts zu neigen, und die nach links und nach rechts lenkbar sind; und
einen Stützmechanismus (52), der dazu ausgebildet ist, zu ermöglichen, dass die zwei Vorderräder (51F) durch den Fahrzeugkörper (54) gestützt werden, und der folgende Merkmale aufweist: ein erstes Element (555); ein zweites Element (554); und einen Gelenkmechanismus, der das erste Element (555) und das zweite Element (554) derart verbindet, dass ermöglicht wird, dass das erste Element (555) und das zweite Element (554) zusammen mit einem Neigen der zwei Vorderräder (51F) relativ zueinander verschoben werden, und ermöglicht wird, dass das erste Element (555) und das zweite Element (554) zusammen mit einem Lenken der zwei Vorderräder (51F) relativ zueinander verschoben werden,
wobei:
der Gelenkmechanismus ein Kugelgelenk (1) ist, das das erste Element (555) und das zweite Element (554) verbindet, wobei der Gelenkmechanismus folgende Merkmale aufweist:
einen Kugelbolzen (3), der einen kugelförmigen Kugelteil (31) und eine stangenartige erste Welle (32) aufweist; und
einen Metallhalter (2), der den Kugelteil (31) derart hält, dass der Kugelteil (31) frei drehbar ist, wobei der Metallhalter (2) einen offenen Endteil (210) aufweist, der von dem Kugelbolzen (3) durchdrungen ist; und
der offene Endteil (210) derart gebildet ist, dass:
der offene Endteil (210) eine Innenkante aufweist, die einen ersten Innenkantenteil (211), einen zweiten Innenkantenteil (212), einen dritten Innenkantenteil (213) und einen vierten Innenkantenteil (214) aufweist;
der erste und der zweite Innenkantenteil (211, 212) jeweils an Positionen außerhalb des Umfangs eines Teils maximaler Breite des Kugelteils (31) in Bezug auf eine Richtung senkrecht zu einer Mittelachse (CL) des Kugelbolzens (3) gebildet sind, der sich in seiner neutralen Lenkungs- und neutralen Neigungsposition befindet,
der dritte und der vierte Innenkantenteil (213, 214) separat zwischen dem ersten und dem zweiten Innenkantenteil (211, 212) positioniert sind, der dritte und der vierte Innenkantenteil (213, 214) jedoch jeweils an Positionen innerhalb des Umfangs des Teils maximaler Breite des Kugelteils (31) gebildet sind,
wenn die zwei Vorderräder (51F) aus ihren jeweiligen neutralen Lenkungs- und neutralen Neigungspositionen gelenkt oder geneigt werden, der Neigungswinkel des Kugelbolzens (3) zwischen dem ersten und dem zweiten Innenkantenteil (211, 212) variiert.

2. Das Neigungsfahrzeug (5) gemäß Anspruch 1, wobei:
der offene Endteil (210) derart gebildet ist, dass:
in Bezug auf eine Richtung parallel zu der Mittelachse (CL) des Kugelbolzens (3), der sich in seiner neutralen Lenkungs- und neutralen Neigungsposition befindet, der erste und der zweite Innenkantenteil (211, 212) zwischen der Mitte des Kugelteils (31) und einem kugelseitigen Ende der ersten Welle (32) positioniert sind; und
in Bezug auf die Richtung parallel zu der Mittelachse (CL) des Kugelbolzens (3), der sich in seiner neutralen Lenkungs- und neutralen Neigungsposition befindet, das kugelseitige Ende der ersten Welle (32) zwischen entweder dem ersten oder dem zweiten Innenkantenteil (211, 212) und entweder dem dritten oder dem vierten Innenkantenteil (213, 214) positioniert ist.

3. Das Neigungsfahrzeug (5) gemäß Anspruch 1 oder 2, wobei
der offene Endteil (210) derart gebildet ist, dass der erste und der zweite Innenkantenteil (211, 212) gebildet sind, um zu ermöglichen, dass der Neigungswinkel des Kugelbolzens (3) innerhalb eines Bereichs von ± 25 Grad aus der neutralen Lenkungs- und neutralen Neigungsposition des Kugelbolzens (3) variabel ist.

4. Das Neigungsfahrzeug (5) gemäß einem der Ansprüche 1 bis 3, wobei
der Neigungswinkel des Kugelbolzens (3) durch Kontakt des Kugelbolzens (3) mit einem anderen Teil als der Innenkante des offenen Endteils (210) begrenzt ist.

5. Das Neigungsfahrzeug (5) gemäß einem der Ansprüche 1 bis 4, wobei
der Neigungswinkel des Kugelbolzens (3), der zwischen dem ersten und dem zweiten Innenkantenteil (211, 212) variabel ist, einem Lenkwinkel entspricht, mit dem die zwei Vorderräder (51F) gelenkt werden; und
selbst wenn sich die zwei Vorderräder (51F) neigen, der Neigungswinkel des Kugelbolzens (3) zwischen dem ersten und dem zweiten Innenkantenteil (211, 212) variabel ist.

## Revendications

1. Véhicule à inclinaison (5) comprenant:
une carrosserie de véhicule (54) qui est à même de s'incliner vers la gauche et vers la droite du véhicule à inclinaison (5);
deux roues avant (51F) qui sont configurées pour s'incliner vers la gauche et vers la droite ensemble avec la carrosserie de véhicule (54) et qui peuvent être orientées vers la gauche et vers la droite; et
un mécanisme de support (52) qui est configuré pour permettre que les deux roues avant (51F) soient supportées par la carrosserie de véhicule (54) et qui comporte: un premier élément (555); un deuxième élément (554); et un mécanisme commun qui connecte le premier élément (555) et le deuxième élément (554) de manière à permettre que le premier élément (555) et le deuxième élément (554) soient déplacés l'un par rapport à l'autre ensemble avec l'inclinaison des deux roues avant (51F) et à permettre que le premier élément (555) et le deuxième élément (554) soient déplacés l'un par rapport à l'autre ensemble avec la direction des deux roues avant (51F),
dans lequel:
le mécanisme commun est un joint à rotule (1) qui connecte le premier élément (555) et le deuxième élément (554), le mécanisme commun comportant:
un goujon à rotule (3) comportant une partie de bille sphérique (31) et un premier arbre en forme de barre (32); et
un support métallique (2) qui maintient la bille sphérique (31) de manière telle que la bille sphérique (31) puisse tourner librement, le support métallique (2) présentant une partie d'extrémité ouverte (210) percée par le goujon à rotule (3); et
la partie d'extrémité ouverte (210) est formée de manière telle que:
la partie d'extrémité ouverte (210) présente un bord intérieur comportant une première partie de bord intérieur (211), une deuxième partie de bord intérieur (212), une troisième partie de bord intérieur (213) et une quatrième partie de bord intérieur (214);
les première et deuxième parties de bord intérieur (211, 212) sont formées, chacune, à des positions à l'extérieur de la circonférence d'une partie de largeur maximale de la partie de bille (31) par rapport à une direction perpendiculaire à un axe central (CL) du goujon à rotule (3) qui se trouve dans sa position de direction neutre et d'inclinaison neutre,
les troisième et quatrième parties de bord intérieur (213, 214) sont positionnées de manière séparée entre les première et deuxième parties de bord intérieur (211, 212), les troisième et quatrième parties de bord intérieur (213, 214) sont toutefois formées, chacune, à des positions vers l'intérieur par rapport à la circonférence de la partie de largeur maximale de la partie de bille (31),
lorsque les deux roues avant (51F) sont dirigées ou inclinées à partir de leurs positions de direction neutre et d'inclinaison neutre respectives, l'angle d'inclinaison du goujon à rotule (3) varie entre les première et deuxième parties de bord intérieur (211, 212).

2. Véhicule à inclinaison (5) selon la revendication 1, dans lequel:
la partie d'extrémité ouverte (210) est formée de manière telle que:
par rapport à une direction parallèle à l'axe central (CL) du goujon à rotule (3) qui se trouve dans sa position de direction neutre et sa position d'inclinaison neutre, les première et deuxième parties de bord intérieur (211, 212) soient positionnées entre le centre de la partie de bille (31) et une extrémité du côté de la bille du premier arbre (32); et
par rapport à la direction parallèle à l'axe central (CL) du goujon à rotule (3) qui se trouve dans sa position de direction neutre et sa position d'inclinaison neutre, l'extrémité du côté de la bille du premier arbre (32) soit positionnée entre l'une ou l'autre de la première ou de la deuxième partie de bord intérieur (211, 212) et l'une ou l'autre de la troisième ou de la quatrième partie de bord intérieur (213, 214).

3. Véhicule à inclinaison (5) selon la revendication 1 ou 2, dans lequel
la partie d'extrémité ouverte (210) est formée de manière telle que les première et deuxième parties de bord intérieur (211, 212) soient formées pour permettre que l'angle d'inclinaison du goujon à rotule (3) soit variable dans une plage de ± 25 degrés par rapport à la position de direction neutre et la position d'inclinaison neutre de la rotule (3).

4. Véhicule à inclinaison (5) selon l'une quelconque des revendications 1 à 3, dans lequel
l'angle d'inclinaison du goujon à rotule (3) est limité par le contact du goujon à rotule (3) avec toute partie autre que le bord intérieur de la partie d'extrémité ouverte (210).

5. Véhicule à inclinaison (5) selon l'une quelconque des revendications 1 à 4, dans lequel
l'angle d'inclinaison du goujon à rotule (3), qui est variable entre les première et deuxième parties de bord intérieur (211, 212), correspond à un angle de direction auquel sont dirigées les deux roues avant (51F); et
même lorsque les deux roues avant (51F) sont inclinées, l'angle d'inclinaison du goujon à rotule (3) est variable entre les première et deuxième parties de bord intérieur (211, 212).
